# EUROPEAN PATENT SPECIFICATION

(11) **EP 3 275 742 B1**
(45) Date of publication and mention of the grant of the patent: **26.08.2020**
(21) Application number: 16706904.6
(22) Date of filing: 02.02.2016
(51) Int. Cl.: B60T 8/17, B60T 8/32

(54) **HYDRAULIC APPARATUS AND CONTROL METHOD FOR HYDRAULIC APPARATUS**
HYDRAULISCHE VORRICHTUNG UND STEUERUNGSVERFAHREN FÜR EINE HYDRAULISCHE VORRICHTUNG
APPAREIL HYDRAULIQUE ET PROCÉDÉ DE COMMANDE POUR APPAREIL HYDRAULIQUE

(30) Priority: 25.03.2015 JP 2015062435
(43) Date of publication of application: 31.01.2018
(73) Proprietor: Robert Bosch GmbH, 70442 Stuttgart (DE)
(72) Inventor: OSHIDA, Yuki, Yokohama-shi Kanagawa 224-8501 (JP); ONO, Shunsaku, Yokohama-shi Kanagawa 224-8501 (JP)
(86) International application number: PCT/IB2016/050515
(87) International publication number: WO 2016/151413

(56) References cited:
- EP-A1- 1 431 150
- JP-A- 2014 108 712
- US-A- 5 660 449
- US-A1- 2014 008 967
- US-B2- 8 655 567

## Description

### Technical Field

The present invention relates to a hydraulic apparatus and a control method for a hydraulic apparatus.

### Background Art

In a vehicle such as a motorcycle, when the driver operates the brake lever, the pressure in the brake circuit containing brake fluid changes and a braking force is applied to wheels. In addition, some vehicles incorporate, as an apparatus applying a braking force to wheels, a hydraulic apparatus including an openable and closable regulating valve, a pump unit operating in conjunction with the regulating valve, and the like. The hydraulic apparatus operates automatically under electronic control, increases or reduces the pressure in the brake circuit, and controls the braking force applied to wheels.

Since the capability of the pump unit depends on the outside air temperature or the like, it may become difficult to ensure the accuracy with which the pressure in the brake circuit is controlled. Accordingly, there is proposed a hydraulic apparatus in which the operation time of the regulation valve operating in conjunction with the pump unit is corrected in consideration of factors such as the outside air temperature (see JP-T-11-504590, for example).

US 8 655 567 B2 discloses a brake control device including a regulating valve which is arranged in a pipe connected to a wheel cylinder, and a control system which repeatedly performs an opening and closing operation of the regulating valve. A wheel cylinder pressure is increased to the target wheel cylinder pressure by repeating an opening and closing operation of the valve in a basic cycle for several times. At each basic cycle, the pressure is gradually increased about a desired pressure increase amount, wherein an open time of the regulating valve is determined depending on the desired pressure increase amount and the wheel cylinder pressure at each moment. Summary of Invention

### Technical Problem

In a conventional hydraulic apparatus, the opening and closing time of a regulating valve is determined depending on the difference between the target pressure of the cylinder and the current pressure of the cylinder or the like. The opening and closing operation is performed once at preset periods. Here, the difference between the target pressure of the cylinder and the current pressure of the cylinder or the like includes a certain amount of error. When the opening and closing operation of the regulating valve is performed once every period, if the amount of error is large, the cylinder pressure after the opening and closing operation likely exceeds the target pressure, thereby making it difficult to ensure accuracy of pressure control.

As described above, since the pressure control of a hydraulic apparatus is affected by, for example, factors such as error included in the difference between the target pressure of the cylinder and the current pressure of the cylinder in addition to changes in the capability of the pump unit, it is difficult to ensure the accuracy.

In order to ensure the pressure control of the hydraulic apparatus, there is means that, for example, calculates the target pressure of a cylinder at short periods and increases the number of opening and closing operations of a regulating valve per unit time accordingly, so that the accuracy of pressure control is ensured. However, this means increases the frequency at which the target pressure is calculated, thereby increasing calculation loads on a control system.

The invention addresses the above problems with an object of providing a hydraulic apparatus and a control method for the hydraulic apparatus that can improve the accuracy with which the pressure of a brake fluid is controlled while suppressing calculation loads on the control system.

### Solution to Problem

According to the invention, there is provided a hydraulic apparatus to be incorporated into a vehicle, including a regulating valve provided in a pipe connected to a wheel cylinder of the vehicle, the regulating valve regulating a pressure of a brake fluid in the pipe and a control system repeatedly performing an opening and closing operation of the regulating valve based on a target pressure value of the wheel cylinder and a pressure value of the wheel cylinder, in which, when performing an n-th (n ≥ 2) opening and closing operation of the regulating valve in a preset period, the control system determines a holding time of an opening and closing state in the n-th opening and closing operation of the regulating valve based on the pressure value in the n-th opening and closing operation of the regulating valve and the target pressure value in an m-th (m < n) opening and closing operation of the regulating valve in the period and, based on the holding time, performs the n-th opening and closing operation of the regulating valve.

According to the invention, there is provided a control method for a hydraulic apparatus including a regulating valve provided in a pipe connected to a wheel cylinder of a vehicle, the regulating valve regulating a pressure of a brake fluid in the pipe, the method including a step of repeatedly performing an opening and closing operation of the regulating valve based on a target pressure value of the wheel cylinder and a pressure value of the wheel cylinder, in which, in the step, when an n-th (n ≥ 2) opening and closing operation of the regulating valve in a preset period is performed, a holding time of an opening and closing state in the n-th opening and closing operation of the regulating valve is determined based on the pressure value in the n-th opening and closing operation of the regulating valve and the target pressure value in an m-th (m < n) opening and closing operation of the regulating valve in the period and the n-th opening and closing operation of the regulating valve is performed based on the holding time. Advantageous Effects of Invention

In the hydraulic apparatus and the control method for the hydraulic apparatus according to the invention, since a plurality of opening and closing operations of the regulating valve is performed for each period, the accuracy of pressure control of the brake fluid can be improved.

In the hydraulic apparatus and the control method for the hydraulic apparatus according to the invention, since the holding time is determined using the target pressure value in the opening and closing operation of the regulating valve before the n-th (n ≥ 2) opening and closing operation, the frequency of calculation of the target pressure value can be reduced and calculation loads on the control system can be suppressed.

Accordingly, the hydraulic apparatus and the control method for the hydraulic apparatus according to the invention can improve the accuracy of the pressure control of the brake fluid while suppressing calculation loads on the control system.

### Brief Description of Drawings

[Fig. 1] Fig. 1 illustrates an example of the schematic structure of a hydraulic pressure control system including a hydraulic apparatus according to an embodiment of the invention.
[Fig. 2] Fig. 2 is a functional block diagram illustrating various sensors, a control system, and various actuators included in the hydraulic pressure control system illustrated in Fig. 1.
[Fig. 3] Fig. 3 is a functional block diagram illustrating the control system illustrated in Fig. 2.
[Fig. 4] Fig. 4 is a graph illustrating temporal changes in the wheel speed, temporal changes in the target pressure value of a wheel cylinder WC, and the like.
[Fig. 5] Fig. 5 illustrates temporal changes in the pressure value L6 of the wheel cylinder WC in pressure increasing control during operation of an ABS.
[Fig. 6] Fig. 6 is an example of a control flow of the pressure increasing control of the hydraulic apparatus according to the embodiment of the invention.
[Fig. 7] Fig. 7 illustrates temporal changes in the pressure value L6 of the wheel cylinder WC during the pressure increasing control of a conventional hydraulic apparatus. Description of Embodiments

A hydraulic apparatus and a control method for the hydraulic apparatus according to the invention will be described below with reference to the drawings. The structure, operation, and the like described below are only examples and the hydraulic apparatus according to the invention is not limited to the examples having the structure, operation, and the like. In the drawings, illustration is simplified or omitted as appropriate. In addition, duplicate descriptions are simplified or omitted as appropriate.

### Embodiment

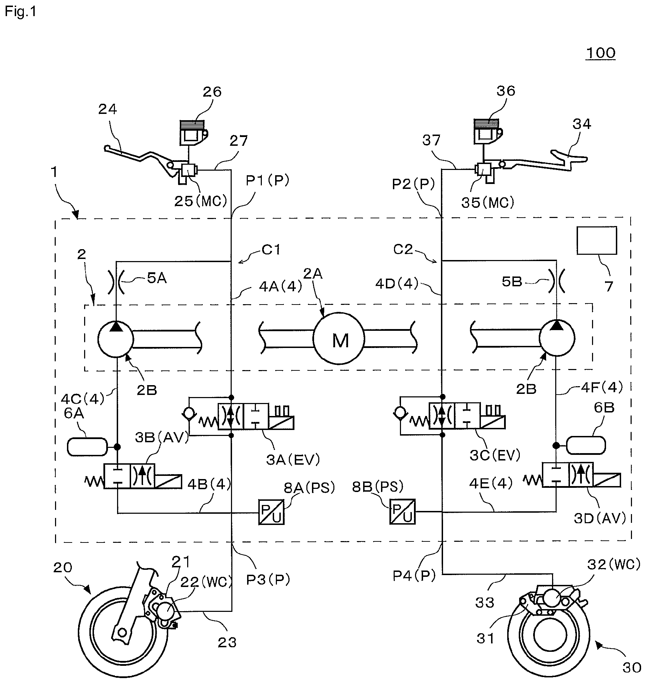

A hydraulic apparatus and a control method for the hydraulic apparatus according to an embodiment will be described below. Fig. 1 illustrates an example of the schematic structure of a hydraulic pressure control system 100 including a hydraulic apparatus 1 according to the embodiment.

### <Entire structure of the hydraulic pressure control system 100>

The hydraulic pressure control system 100 is installed in a vehicle such as, for example, a motorcycle and includes the hydraulic apparatus 1 generating a braking force for a motorcycle. The hydraulic apparatus 1 may be installed in a vehicle such as a four-wheeled vehicle or truck and may generate a braking force for the vehicle. In the embodiment, an example in which the hydraulic pressure control system 100 is installed in a motorcycle is described. The motorcycle includes a front wheel 20, a rear wheel 30, and a handle lever 24 and a foot pedal 34 operated by the user driving the motorcycle or the like. An operation of the handle lever 24 changes the braking force of the front wheel 20 and an operation of the foot pedal 34 changes the braking force of the rear wheel 30.

The hydraulic pressure control system 100 includes a front wheel hydraulic pressure circuit C1, used to generate a braking force for the front wheel 20, through which the brake fluid flows and a rear wheel hydraulic pressure circuit C2, used to generate a braking force for the rear wheel 30, through which the brake fluid flows. Each of the front wheel hydraulic pressure circuit C1 and the rear wheel hydraulic pressure circuit C2 includes an internal flow passage 4 in the hydraulic apparatus 1, which will be described later. Various brake oils may be used as the brake fluid.

The hydraulic pressure control system 100 has the following structure as a mechanism for generating a braking force for the front wheel 20. That is, the hydraulic pressure control system 100 includes a front brake pad 21 provided in the front wheel 20, a front wheel cylinder 22 in which a front brake piston (not illustrated) for moving the front brake pad 21 is slidably provided, and a brake fluid pipe 23 connected to the front wheel cylinder 22. The front brake pad 21 is provided so as to clamp a floating rotor (not illustrated) rotating together with the front wheel 20. When the front brake pad 21 is pushed by a front brake piston in the front wheel cylinder 22, the front brake pad 21 comes in contact with the floating rotor to generate a frictional force and a braking force is applied to the front wheel 20 rotating together with the floating rotor.

The hydraulic pressure control system 100 includes a first master cylinder 25 provided in the handle lever 24, a first reserver 26 in which the brake fluid is stored, and a brake fluid pipe 27 connected to the first master cylinder 25. A master cylinder piston (not illustrated) is provided slidably in the first master cylinder 25. When the handle lever 24 is operated, the master cylinder piston in the first master cylinder 25 moves. Since the pressure of the brake fluid applied to the front brake piston changes depending on the position of the master cylinder piston, the force applied to clamp the floating rotor by the front brake pad 21 changes and the braking force for the front wheel 20 also changes.

The hydraulic pressure control system 100 has the following structure as a mechanism for generating a braking force for the rear wheel 30 or the like. That is, the hydraulic pressure control system 100 includes a rear brake pad 31 provided in the rear wheel 30, a rear wheel cylinder 32 in which a rear brake piston (not illustrated) for moving the rear brake pad 31 is slidably provided, and the brake fluid pipe 33 connected to the rear wheel cylinder 32. The rear brake pad 31 is provided so as to clamp a floating rotor (not illustrated) rotating together with the rear wheel 30. When the rear brake pad 31 is pushed by the rear brake piston in the rear wheel cylinder 32, the rear brake pad 31 comes in contact with the floating rotor to generate a frictional force and a braking force is applied to the rear wheel 30 rotating together with the floating rotor.

The hydraulic pressure control system 100 includes a second master cylinder 35 provided in the foot pedal 34, a second reserver 36 in which the brake fluid is stored, and a brake fluid pipe 37 connected to the second master cylinder 35. A master cylinder piston (not illustrated) is provided slidably in the second master cylinder 35. When the foot pedal 34 is operated, the master cylinder piston in the second master cylinder 35 moves. Since the pressure of the brake fluid applied to the rear brake piston changes depending on the position of the master cylinder piston, the force applied to clamp the floating rotor by the rear brake pad 31 changes and the braking force for the rear wheel 30 also changes.

### <Description of the structure of the hydraulic apparatus 1>

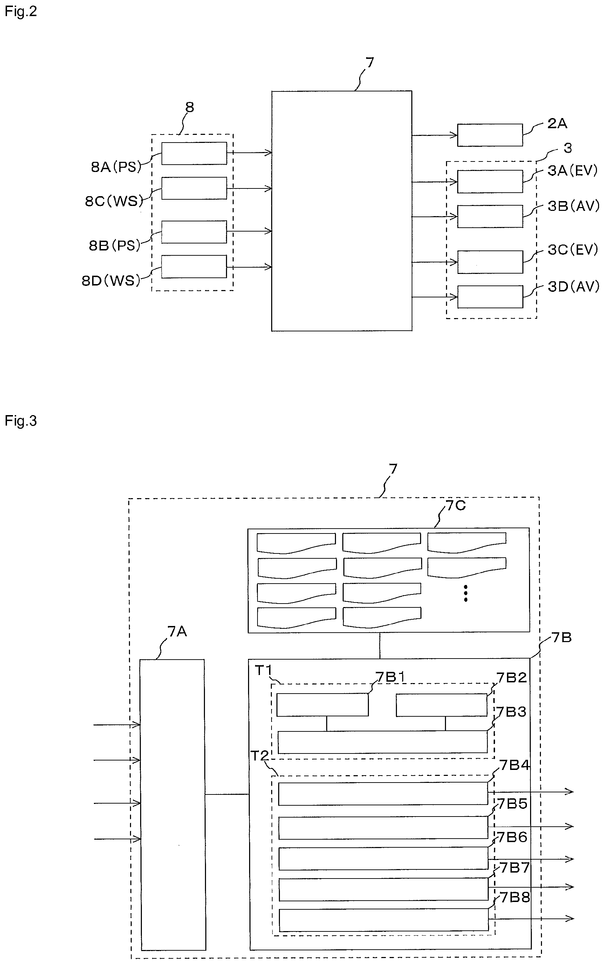

The hydraulic apparatus 1 is incorporated in a vehicle such as, for example, a motorcycle. The hydraulic apparatus 1 includes the internal flow passage 4 through which the brake fluid flows, a pump unit 2 used to transfer the brake fluid in the internal flow passage 4 toward the first master cylinder 25 and the second master cylinder 35, and an openable and closable regulating valve 3 provided in each of the front wheel hydraulic pressure circuit C1 and the rear wheel hydraulic pressure circuit C2. The regulating valve 3 includes a first pressure amplifying valve 3A, a first pressure reducing valve 3B, a second pressure amplifying valve 3C, and a second pressure reducing valve 3D (see Fig. 2).

In addition, the hydraulic apparatus 1 includes various ports P connected to corresponding pipes such as the brake fluid pipe 23, a first float restrictor 5A and a second float restrictor 5B that restrict the flow rate of the brake fluid flowing through the internal flow passage 4, and a first accumulator 6A and a second accumulator 6B that can store the brake fluid. The various ports P include a first port P1, a second port P2, a third port P3, and a fourth port P4.

In addition, the hydraulic apparatus 1 includes a control system 7 controlling, for example, the opening and closing of the regulating valve 3 and a detecting unit 8 including a first pressure sensor 8A detecting the pressure of the front wheel cylinder 22, a second pressure sensor 8B detecting the pressure of the rear wheel cylinder 32, and the like (see Fig. 2).

### (Internal flow passage 4)

The internal flow passage 4 includes a first internal flow passage 4A, a second internal flow passage 4B, and a third internal flow passage 4C, which configure a part of the front wheel hydraulic pressure circuit C1, and a fourth internal flow passage 4D, a fifth internal flow passage 4E, and a sixth internal flow passage 4F, which configure a part of the rear wheel hydraulic pressure circuit C2. The pipe according to the invention has a structure corresponding to the internal flow passage 4.

The first internal flow passage 4A is connected to the brake fluid outflow side of the pump unit 2, the first pressure amplifying valve 3A, and the first port P1. The first internal flow passage 4A is provided with the first float restrictor 5A. The second internal flow passage 4B is connected to the first pressure amplifying valve 3A, the first pressure reducing valve 3B, and the third port P3. In addition, the second internal flow passage 4B is provided with the first pressure sensor 8A. The third internal flow passage 4C is connected to the brake fluid inflow side of the pump unit 2 and the first pressure reducing valve 3B. In addition, the third internal flow passage 4C is provided with the first accumulator 6A.

The fourth internal flow passage 4D is connected to the brake fluid outflow side of the pump unit 2, the second pressure amplifying valve 3C, and the second port P2. In addition, the fourth internal flow passage 4D is provided with the second float restrictor 5B. The fifth internal flow passage 4E is connected to the second pressure amplifying valve 3C, the second pressure reducing valve 3D, and the fourth port P4. In addition, the fifth internal flow passage 4E is provided with the second pressure sensor 8B. The sixth internal flow passage 4F is connected to the brake fluid inflow side of the pump unit 2 and the second pressure reducing valve 3D. In addition, the sixth internal flow passage 4F is provided with the second accumulator 6B.

### (Pump unit 2)

The pump unit 2 includes a driving mechanism 2A including, for example, a DC motor or the like and two pump elements 2B for which a driving force is provided by the driving mechanism 2A. The driving mechanism 2A includes a stator, a rotor, and the like and its rotational frequency is controlled by the control system 7. One of the two pump elements 2B is used to transfer the brake fluid in the front wheel hydraulic pressure circuit C1. In addition, the one pump element 2B transfers the brake fluid in the third internal flow passage 4C toward the first internal flow passage 4A. The other pump element 2B is used to transfer the brake fluid in the rear wheel hydraulic pressure circuit C2. In addition, the other pump element 2B transfers the brake fluid in the sixth internal flow passage 4F toward the fourth internal flow passage 4D.

### (Regulating valve 3)

The regulating valve 3 is provided in the internal flow passage 4. The opening and closing of the regulating valve 3 is controlled by the control system 7. The regulating valve 3 includes the first pressure amplifying valve 3A, the first pressure reducing valve 3B, the second pressure amplifying valve 3C, and the second pressure reducing valve 3D. The regulating valve 3 can form, for example, an electromagnetic valve including a solenoid and the control system 7 switches the opening and closing state by controlling energization.

The first pressure amplifying valve 3A has one end connected to the first internal flow passage 4A and the other end connected to the second internal flow passage 4B. The first pressure amplifying valve 3A is opened to increase the pressure of the brake fluid in the front wheel cylinder 22 during operation of an ABS (Antilock Brake System). That is, when the first pressure amplifying valve 3A is opened, the effects of the first master cylinder 25 and the one pump element 2B corresponding to the first master cylinder 25 push the brake fluid close to the first internal flow passage 4A against the second internal flow passage 4B. As a result, the pressure of the front wheel cylinder 22 increases and the opening of the front brake pad 21 becomes smaller, thereby increasing the braking force for the front wheel 20.

The first pressure reducing valve 3B has one end connected to the third internal flow passage 4C and the other end connected to the second internal flow passage 4B. The first pressure reducing valve 3B is opened to reduce the pressure of the brake fluid in the front wheel cylinder 22 during operation of an ABS. That is, when the first pressure reducing valve 3B is opened, the effect of the one pump element 2B draws the brake fluid in the brake fluid pipe 23 and the second internal flow passage 4B toward the third internal flow passage 4C. As a result, the pressure of the front wheel cylinder 22 reduces and the opening of the front brake pad 21 becomes larger, thereby reducing the braking force for the front wheel 20.

When the first pressure reducing valve 3B is opened during operation of the ABS, the first pressure amplifying valve 3A is closed. When the first pressure amplifying valve 3A is opened, the first pressure reducing valve 3B is closed.

The second pressure amplifying valve 3C also has the structure and function corresponding to the first pressure amplifying valve 3A. The second pressure amplifying valve 3C has one end connected to the fourth internal flow passage 4D and the other end connected to the fifth internal flow passage 4E. The second pressure amplifying valve 3C is opened to increase the pressure of the brake fluid in the rear wheel cylinder 32 during operation of an ABS. That is, when the second pressure amplifying valve 3C is opened, the effects of the second master cylinder 35 and the other pump element 2B corresponding to the second master cylinder 35 push the brake fluid close to the fourth internal flow passage 4D against the fifth internal flow passage 4E. As a result, the pressure of the rear wheel cylinder 32 increases and the opening of the rear brake pad 31 becomes smaller, thereby increasing the braking force for the rear wheel 30.

The second pressure reducing valve 3D also has the structure and function corresponding to the first pressure reducing valve 3B. The second pressure reducing valve 3D has one end connected to the sixth internal flow passage 4F and the other end connected to the fifth internal flow passage 4E. The second pressure reducing valve 3D is opened to reduce the pressure of the brake fluid in the rear wheel cylinder 32 during operation of the ABS. That is, when second pressure reducing valve 3D is opened, the effect of the other pump element 2B draws the brake fluid in the brake fluid pipe 33 and the fifth internal flow passage 4E toward the sixth internal flow passage 4F. As a result, the pressure of the rear wheel cylinder 32 reduces and the opening of the rear brake pad 31 becomes larger, thereby reducing the braking force for the rear wheel 30.

When the second pressure reducing valve 3D is opened during operation of the ABS, the second pressure amplifying valve 3C is closed. When the second pressure amplifying valve 3C is opened, the second pressure reducing valve 3D is closed.

### (Various Ports P)

Various ports P include the first port P1 corresponding to a driving mechanism such as the handle lever 24, the second port P2 corresponding to a driving mechanism such as the foot pedal 34, the third port P3 corresponding to a driving mechanism such as the front brake pad 21, and the fourth port P4 corresponding to a driving mechanism such as the rear brake pad 31. The brake fluid pipe 27 and the first internal flow passage 4A are connected to the first port P1. The brake fluid pipe 37 and the fourth internal flow passage 4D are connected to the second port P2. The second internal flow passage 4B and the brake fluid pipe 23 are connected to the third port P3. The fifth internal flow passage 4E and the brake fluid pipe 33 are connected to the fourth port P4.

### (First float restrictor 5A and second float restrictor 5B)

The first float restrictor 5A is provided on the brake fluid outflow side of the one pump element 2B of the first internal flow passage 4A. The second float restrictor 5B is provided on the brake fluid outflow side of the other pump element 2B of the fourth internal flow passage 4D. The effect of the first float restrictor 5A causes the brake fluid to be flowed out from the one pump element 2B toward the first master cylinder 25, thereby preventing the pressure of the brake fluid in the first master cylinder 25 from increasing sharply. The second float restrictor 5B also has the effect corresponding to that of the first float restrictor 5A and prevents the pressure of the brake fluid in the second master cylinder 35 from increasing sharply.

### (First accumulator 6A and second accumulator 6B)

The first accumulator 6A is provided in the third internal flow passage 4C. The first accumulator 6A is used to, for example, keep the pressure of the brake fluid in the front wheel hydraulic pressure circuit C1. The second accumulator 6B is provided in the sixth internal flow passage 4F. The second accumulator 6B is used to, for example, keep the pressure of the brake fluid in the rear wheel hydraulic pressure circuit C2.

### (Control system 7 and detecting unit 8)

The control system 7 receives a signal from the detecting unit 8 and controls the rotational frequency of the driving mechanism 2A of the pump unit 2, the opening and closing of the regulating valve 3, and the like. The control system 7 prevents the front wheel 20 and the rear wheel 30 from being locked by controlling the opening and closing of the regulating valve 3 during operation of the ABS. In the controlling of the opening and closing of the regulating valve 3, when the control system 7 performs an n-th (n ≥ 2) opening and closing operation in a preset period based on the pressure value in the n-th opening and closing operation of the regulating valve 3 and the target pressure value in the m-th (m < n) opening and closing operation of the regulating valve 3 in the same period, the control system 7 determines the holding time of the opening and closing state of the regulating valve 3 in the n-th opening and closing operation and, based on the holding time, performs the n-th opening and closing operation of the regulating valve 3. The structures and the like of the control system 7 and the detecting unit 8 will be detailed in the descriptions of Figs. 2 and 3.

### <Structures of control system 7 and detecting unit 8>

Fig. 2 is a functional block diagram illustrating various sensors, the control system 7, and various actuators included in the hydraulic pressure control system 100 illustrated in Fig. 1. Fig. 3 is a functional block diagram of the control system 7 illustrated in Fig. 2. The control system 7 and the detecting unit 8 will be described with reference to Figs. 2 and 3.

The control system 7 includes an input unit 7A receiving a signal from the detecting unit 8, a processor unit 7B controlling the regulating valve 3 and calculating the speed of a vehicle body or the like based on a signal from the detecting unit 8, and a memory unit 7C in which the pressure data of the front wheel cylinder 22, the rotational speed data of the front wheel 20, and the like are stored.

The control system 7 can calculate the pressure of the first master cylinder 25 and the pressure of the second master cylinder 35. For example, the pressure of the first master cylinder 25 can be calculated based on the pressure value of the front wheel cylinder 22 obtained from a signal of the first pressure sensor 8A and the acceleration obtained from a signal of an acceleration sensor (not illustrated). In addition, the pressure of the first master cylinder 25 may be obtained by providing the third pressure sensor (not illustrated) in the first internal flow passage 4A.

This is true of the pressure of the second master cylinder 35. That is, the pressure of the second master cylinder 35 may be calculated based on the pressure value of the rear wheel cylinder 32 obtained from a signal of the second pressure sensor 8B and the acceleration obtained from a signal of the acceleration sensor or the pressure of the second master cylinder 35 may be obtained by providing the fourth pressure sensor (not illustrated) in the fourth internal flow passage 4D.

The detecting unit 8 includes the first pressure sensor 8A detecting the pressure of the brake fluid in the front wheel cylinder 22 and the second pressure sensor 8B detecting the pressure of the brake fluid in the rear wheel cylinder 32. In addition, the detecting unit 8 includes the wheel speed sensor 8C (not illustrated in Fig. 1) used to calculate the wheel speed corresponding to the front wheel 20 and the wheel speed sensor 8D (not illustrated in Fig. 1) used to calculate the wheel speed corresponding to the rear wheel 30. When a pressure sensor is provided in each of the first internal flow passage 4A and the fourth internal flow passage 4D as described above, the pressure sensor is also included in the detecting unit 8.

In the following description, the front wheel speed and the rear wheel speed may be collectively referred to as the wheel speed.

In addition, the front wheel cylinder 22 and the rear wheel cylinder 32 may be collectively referred to as the wheel cylinder WC, the first pressure sensor 8A and the second pressure sensor 8B may be collectively referred to as the pressure sensor PS, and the first master cylinder 25 and the second master cylinder 35 may be collectively referred to as the master cylinder MC.

In addition, the wheel speed sensor 8C and the wheel speed sensor 8D may be collectively referred to as the wheel speed sensor WS, the first pressure amplifying valve 3A and the second pressure amplifying valve 3C may be collectively referred to as pressure amplifying valve EV, and the first pressure reducing valve 3B and the second pressure reducing valve 3D may be collectively referred to as the pressure reducing valve AV. Here, the pressure amplifying valve EV adjusts the flow rate of the brake fluid flowing toward the wheel cylinder WC. The pressure reducing valve AV reduces the pressure of the brake fluid supplied toward the wheel cylinder WC.

### (Input unit 7A)

The input unit 7A includes circuits such as an input circuit receiving a signal from, for example, the detecting unit 8. The signal received by the input unit 7A is output to the processor unit 7B.

### (Processor unit 7B)

The processor unit 7B includes a calculating unit T1 and an actuator control unit T2. The calculating unit T1 includes a speed calculating unit 7B1, a differential pressure calculating unit 7B2, and a holding time determination unit 7B3. The processor unit 7B may include, for example, a micro controller and the like.

The speed calculating unit 7B1 calculates the front wheel speed based on a signal from the wheel speed sensor 8C and calculates the rear wheel speed based on a signal from the wheel speed sensor 8D. In addition, the speed calculating unit 7B1 calculates the vehicle body speed based on, for example, the front and rear wheel speed. The wheel speed and the vehicle body speed are used to determine whether the ABS is operated.

The differential pressure calculating unit 7B2 can calculate the following two types of differences (differential pressures) between pressure values. One is the difference between the preset target pressure value of the wheel cylinder WC and the pressure value of the wheel cylinder WC corresponding to the detected value of the pressure sensor PS. The other is the difference between the pressure value of the master cylinder MC and the pressure value of the wheel cylinder WC. The differential pressure calculating unit 7B2 calculates these differences based on a signal or the like from the pressure sensor PS.

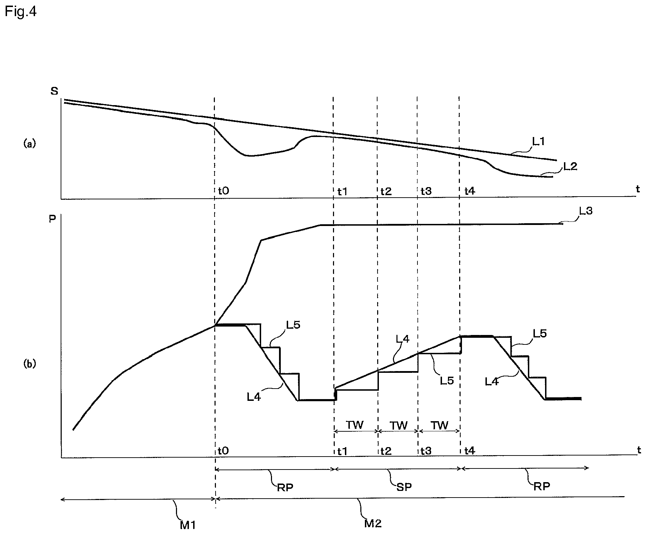

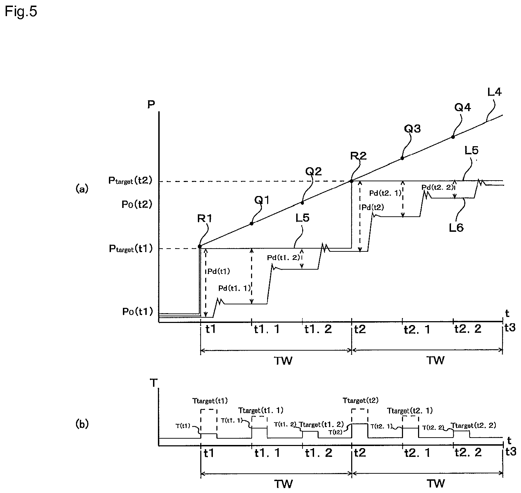

In addition, the differential pressure calculating unit 7B2 calculates the target pressure value of the wheel cylinder WC during operation of the ABS. The hydraulic apparatus 1 has the function of using the calculated target pressure value to suppress the load of calculating the target pressure value of the wheel cylinder WC while performing pressure increasing control for increasing the pressure of the wheel cylinder WC during operation of the ABS and while performing pressure reducing control for reducing the pressure of the wheel cylinder WC during operation of the ABS. That is, the hydraulic apparatus 1 reduces the frequency of calculating the target pressure value of the wheel cylinder WC by using the calculated target pressure value as a common value in a preset period. This will be described later with reference to Figs. 4 and 5.

The holding time determination unit 7B3 makes the determination described below and determines the holding time of the opening and closing state of the regulating valve 3 based on the target pressure value of the wheel cylinder WC obtained from the differential pressure calculating unit 7B2. The holding time of the opening and closing state indicates the time for holding the state in which the pressure amplifying valve EV is opened and the pressure reducing valve AV is closed during pressure increasing control and the time for holding the state in which the pressure amplifying valve EV is closed and the pressure reducing valve AV is opened during pressure reducing control.

The holding time determination unit 7B3 determines whether to operate the ABS based on a signal from the speed calculating unit 7B1.

The holding time determination unit 7B3 determines the holding time of the opening and closing state of the regulating valve 3 during operation of the ABS based on the pressure value of the pressure sensor PS and the target pressure value of the wheel cylinder WC obtained from the differential pressure calculating unit 7B2. That is, when performing an n-th (n ≥ 2) opening and closing operation of the regulating valve 3 in a preset period, the holding time determination unit 7B3 determines the holding time of the regulating valve 3 in the following manner. That is, the holding time determination unit 7B3 determines the holding time of the opening and closing state of the regulating valve 3 based on the pressure value of the wheel cylinder WC in the n-th opening and closing operation of the regulating valve 3 and the target pressure value in an m-th (m < n) opening and closing operation of the regulating valve 3 in the same period and, based on the holding time, performs the n-th opening and closing operation of the regulating valve 3. For example, during pressure increasing control, when performing the n-th opening and closing operation of the pressure amplifying valve EV in the preset period, the holding time determination unit 7B3 determines the holding time of the opening and closing state of the pressure amplifying valve EV based on the pressure value in the n-th opening and closing operation of the pressure amplifying valve EV and the target pressure value of the wheel cylinder WC in the m-th opening and closing operation.

Means for determining whether to operate the ABS and the holding time of the opening and closing state of the regulating valve 3 will be also described later with reference to Figs. 4 and 5.

The actuator control unit T2 includes a driving mechanism control unit 7B4, a first pressure amplifying valve control unit 7B5, a first pressure reducing valve control unit 7B6, a second pressure amplifying valve control unit 7B7, and a second pressure reducing valve control unit 7B8.

After the calculating unit T1 operates the ABS, the driving mechanism control unit 7B4 controls the rotational frequency of the driving mechanism 2A according to the opening and closing operation of the regulating valve 3.

After the calculating unit T1 operates the ABS, the first pressure amplifying valve control unit 7B5 performs the opening and closing operation of the first pressure amplifying valve 3A based on the holding time determined (calculated) by the holding time determination unit 7B3. Similarly, after the calculating unit T1 operates the ABS, the first pressure reducing valve control unit 7B6 performs the opening and closing operation of the first pressure reducing valve 3B based on the holding time determined (calculated) by the holding time determination unit 7B3. The second pressure amplifying valve control unit 7B7 and the second pressure reducing valve control unit 7B8 also perform the opening and closing operation of the second pressure amplifying valve 3C and the second pressure reducing valve 3D in the same manner.

### (Memory unit 7C)

The memory unit 7C stores a signal from the detecting unit 8, the pressure value of the wheel cylinder WC, the pressure value of the master cylinder MC, the wheel speed and vehicle body speed calculated by the processor unit 7B, and the like. The memory unit 7C may include, for example, a RAM (Random Access Memory) and the like.

### (First pressure sensor 8A and second pressure sensor 8B)

The first pressure sensor 8A is used to detect the pressure of the brake fluid in the front wheel cylinder 22 and the second pressure sensor 8B is used to detect the pressure of the brake fluid in the rear wheel cylinder 32. In addition, the first pressure sensor 8A and the second pressure sensor 8B may also be used together with, for example, an acceleration sensor (not illustrated) to detect the pressure of the brake fluid in the first master cylinder 25 and the pressure of the brake fluid in the second master cylinder 35.

### (Wheel speed sensor 8C and wheel speed sensor 8D)

The wheel speed sensor 8C and the wheel speed sensor 8D are used to calculate the speeds of the front wheel 20 and the rear wheel 30. The sensor for calculating the wheel speed may have various aspects. For example, such a sensor may have an aspect in which a magnet is provided in a component rotating together with a wheel, such as a transmission mechanism (such as, for example, a sprocket) and a detecting element (such as, for example, an MR element) is provided in the position of the magnet. In this aspect, a change in the magnetic flux when the magnet passes by the detecting element is converted into an electric signal. Based on the resulting electric signal, the speed calculating unit 7B1 calculates the speeds of the front wheel 20 and the rear wheel 30.

### <Temporal changes in speed, pressure, and the like>

Fig. 4 is a graph illustrating temporal changes in the wheel speed, changes in a target pressure value L5 of the wheel cylinder WC, and the like. Fig. 4(a) illustrates an example of temporal changes in a vehicle body speed L1 and a wheel speed L2. In Fig. 4 (a), the unit of the horizontal axis corresponds to time and the unit of the vertical axis corresponds to speed. In addition, Fig. 4(b) illustrates temporal changes in a pressure L3 of the master cylinder MC, an estimated transition L4 of the target pressure of the wheel cylinder WC, and temporal changes in the target pressure value L5 of the wheel cylinder WC. In Fig. 4(b), the unit of the horizontal axis corresponds to time and the unit of the vertical axis corresponds to pressure. In Fig. 4, the scale of the horizontal axis of Fig. 4(a) is the same as that of the horizontal axis of Fig. 4 (b) .

### (L1 and L2)

First, temporal changes in the vehicle body speed L1 and temporal changes in the wheel speed L2 will be described. As illustrated in Fig. 4(a), the wheel speed reduces sharply relative to the vehicle body speed at time t0. As illustrated in Fig. 4(b), the control system 7 detects the abrupt reduction of the wheel speed and makes a transition from the mode for controlling the braking force for the front wheel 20 and the rear wheel 30 to the mode for ABS control that automatically operates the regulating valve 3 and the pump unit 2 and controls the braking force for the front wheel 20 and the rear wheel 30. The period in which the former mode is executed corresponds to M1 in Fig. 4. The period in which the latter mode is executed corresponds to M2 in Fig. 4.

RP in Fig. 4 indicates the period in which pressure reduction control is performed during operation of the ABS. The opening and closing operation of the pressure reducing valve AV is repeated to prevent wheels from being locked and the braking force applied to the wheels is reduced gradually.

SP in Fig. 4 indicates the period in which pressure increasing control is performed during operation of the ABS. When the wheel speed L2 comes close to the vehicle body speed L1, the opening and closing operation of the pressure amplifying valve EV is repeated and the braking force applied to the wheels is increased gradually.

### (L3)

Next, the pressure L3 of the master cylinder MC will be described. During operation of the ABS, the pump unit 2 operates and the brake fluid flows into the pipes close to the master cylinder MC (such as the brake fluid pipe 27 and the brake fluid pipe 37). Accordingly, the pressure L3 of the master cylinder MC increases. During pressure increasing control, as the difference between the pressure L3 of the master cylinder MC and the pressure of the wheel cylinder WC increases, an increase in the pressure of the wheel cylinder WC obtained when the pressure amplifying valve EV is opened and closed once becomes larger. Accordingly, by detecting or calculating the pressure of the pressure L3 of the master cylinder MC, the pressure of the wheel cylinder WC can be controlled in more detail.

### (L4 and L5)

Next, the estimated transition L4 of the target pressure of the wheel cylinder WC and the target pressure value L5 of the wheel cylinder WC will be described.

The estimated transition L4 of the target pressure of the wheel cylinder WC represents the temporal transition of the target pressure of the wheel cylinder WC during operation of the ABS. If the control system 7 continues to calculate the target pressure without a time interval, the target pressure is indicated by the straight line of the estimated transition L4.

Actually, the control system 7 calculates the target pressure at preset periods TW as illustrated by, for example, time t1, time t2, and the like. Then, the control system 7 updates the target pressures calculated at preset periods TW as the target pressure values L5 of the wheel cylinders. Here, the preset periods TW correspond to the periods at which the target pressure value L5 of the wheel cylinder WC is updated.

For example, the control system 7 updates the target pressure value L5 at time t1, time t2, time t3, time t4, and so on. The updated values correspond to the values of the estimated transition L4 at time t1, time t2, time t3, time t4, and so on. Accordingly, the control system 7 holds the target pressure value L5 updated at time t1 without updating it between time t1 and time t2.

Specifically, as illustrated in Fig. 4(b), the target pressure value L5 changes like steps over time. For example, the target pressure value L5 increases at time t1, time t2, and so on. This indicates that the target pressure value L5 is updated at time t1 and time t2. The target pressure value L5 does not change between time t1 and time t2. This indicates that the target pressure value L5 is held between time t1 and time t2.

This is true of the period between time t2 and time t3 and the period between time t3 and time t4. As illustrated above, the estimated transition L4 illustrated in Fig. 4(b) matches the target pressure value L5 at the time at which the target pressure value L5 is updated, but the estimated transition L4 does not necessarily match the target pressure value L5.

Although the estimated transition L4 of the target pressure of the wheel cylinder WC is represented as a straight line during pressure increasing control and pressure reducing control as illustrated in Fig. 4(b), the estimated transition L4 may have another shape. For example, the estimated transition L4 is represented as a straight line of the target pressure that reduces over time during pressure reducing control, the estimated transition L4 may be represented as steps or a curve.

### <Holding time T: pressure of wheel cylinder WC>

Fig. 5 illustrates temporal changes in the pressure value L6 of the wheel cylinder WC and the like in pressure increasing control during operation of the ABS. Fig. 5(a) illustrates the estimated transition L4 of the target pressure of the wheel cylinder WC, the target pressure value L5 of the wheel cylinder WC, and the pressure value L6 of the wheel cylinder WC during pressure increasing control. Fig. 5(b) illustrates the necessary time Ttarget (abbreviated below as Tt) for each time and the holding time T of the opening and closing operation of the regulating valve 3.

Fig. 5 illustrates only the section from time t1 to time t3 in Fig. 4(b) as an example.

In addition, Ptarget (abbreviated below as Pt) in Fig. 5 indicates the target pressure value L5 of the wheel cylinder WC in each period TW. For example, Pt(t1) indicates the target pressure value L5 of the wheel cylinder WC between time t1 and time t2.

In addition, Pd in Fig. 5 indicates the difference between the target pressure value L5 and the pressure value L6 of the wheel cylinder WC in each opening and closing operation of the regulating valve 3. For example, Pd(t1) indicates the difference between the target pressure value L5 and the pressure value L6 of the wheel cylinder WC at time t1.

In the hydraulic apparatus 1, each period TW is divided into a plurality of sections. In the embodiment, the period TW is divided into three sections. Then, at the start of each of the sections, the difference between the target value and the current pressure value of the wheel cylinder WC is calculated.

In Fig. 5, time t1.1 and time t1.2 are present in the section between time t1 and time t2 and time t2.1 and time t2.2 are present in the section between time t2 and time t3. The pressure value L6 corresponds to the detected value obtained from the pressure sensor PS.

As illustrated in Fig. 5, the control system 7 performs the preset number of opening and closing operations of the regulating valve 3 at preset periods TW. The length of each period TW may be the same or different from each other. In the embodiment, the length of each period TW is the same.

The preset number of opening and closing operations of the regulating valve 3 is not limited particularly as long as the number is two or more. The number may be different for each period TW. In the embodiment, the number of opening and closing operations of the regulating valve 3 is set as three in each period TW.

The control system 7 obtains the necessary time Tt for holding the opening and closing state of the regulating valve 3 necessary for each of subsequent opening and closing operations in the preset period Tw using the pressure value L6 of the wheel cylinder WC and the target pressure value L5 of the wheel cylinder WC and, based on the necessary time Tt, determines the holding time T of the opening and closing state in the n-th (n ≥ 2) opening and closing operation of the regulating valve 3. The necessary time Tt is a total of the holding times T of the opening and closing state of the regulating valve 3 necessary for each of subsequent opening and closing operations. In other words, the necessary time is the time calculated to cause the pressure value L6 to reach the target pressure value L5 in one opening and closing operation of the regulating valve 3 in a certain period TW. The holding time T is obtained by multiplying the necessary time Tt by the ratio r (0 < r ≤ 1).

In addition, the control system 7 repeatedly performs the opening and closing operation of the regulating valve 3 based on the difference between the target pressure value L5 and the pressure value L6 changing for each of a plurality of periods TW and, when performing a plurality of opening and closing operations of the regulating valve 3 in a single period TW, uses the common target pressure value L5. That is, the target pressure value L5 used in the opening and closing operations in a single opening and closing operation is common. This means that the target pressure values L5 at time t1, time t1.1, and time t1.2 are the same and the target pressure values at time t2, time t2.1, and time t2.2 are the same. That is, the first to third opening and closing operations in each period TW use the same target pressure value L5.

If the control system 7 calculates the target pressure values at time t1.1, time t1.2, time t2.1, and time t2.2, the target pressure values correspond to points Q1 to Q4 in Fig. 5(a). However, the control system 7 does not calculate the target pressure values at time t1.1, time t1.2, time t2.1, and time t2.2 in the embodiment. The control system 7 uses the target pressure value at time t1 as the target pressure values at time t1.1 and time t1.2 (see point R1 in Fig. 5(a)) and uses the target pressure value at time t2 as the target pressure values at time t2.1 and time t2.2 (see point R2 in Fig. 5(a)).

As described above, the hydraulic apparatus 1 increases the number of opening and closing operations of the regulating valve 3 in each period TW to improve the accuracy of pressure control. However, by using the target pressure value L5 of the wheel cylinder WC, the hydraulic apparatus 1 prevents calculation loads on the control system 7 from increasing due to an increase in the number of opening and closing operations of the regulating valve 3.

The necessary time Tt(t1) is the time calculated to cause the pressure value L6 to reach the target pressure value L5 in one opening and closing operation of the regulating valve 3. The control system 7 does not use the necessary time Tt(t1) as holding time T(t1). The control system 7 obtains the holding time T by multiplying the necessary time Tt(t1) by the ratio r (0 < r ≤ 1). By using the holding time T obtained as described above, the control system 7 prevents the pressure value L6 of the wheel cylinder WC from reaching or exceeding the target pressure value L5 in one operation of the regulating valve 3. Since two opening and closing operations remain, it is desirable to, for example, reduce the ratio r in advance. In the first opening and closing operation of the regulating valve 3, for example, 0.3 or so can be used as the ratio r.

The holding time T(t1.1) is calculated similarly. The control system 7 calculates necessary time Tt(t1.1) that causes the pressure value L6 to reach the target pressure value L5 in one opening and closing operation of the regulating valve 3. Since the pressure value L6 increases after the first opening and closing operation, the necessary time Tt(t1.1) is smaller than the necessary time Tt(t1).

The control system 7 obtains the holding time T(t1.1) by multiplying the necessary time Tt(t1.1) by the ratio r.

At this time, one opening and closing operation has been completed. Accordingly, the number of remaining opening and closing operations is small (the second and third opening and closing operations).

Although the first opening and closing operation has been completed, the ratio r in the first opening and closing operation is small in the embodiment. Therefore, it may be assumed that there is a large difference from the target pressure value since the difference between the target pressure value L5 and the pressure value L6 is large.

Accordingly, since the number of remaining opening and closing operations is small and there is a large difference from the target pressure value, the ratio r in the second opening and closing operation is desirably set as a value larger than that in the first opening and closing operation. In the second opening and closing operation of the regulating valve 3, for example, 0.5 or so can be used as the ratio r.

A holding time T(t1.2) is calculated in the same manner. The control system 7 calculates a necessary time Tt(t1.2) for causing the pressure value L6 to reach the target pressure value L5 in one opening and closing operation of the regulating valve 3. Since the pressure value L6 increases after the second opening and closing operation, the necessary time Tt(t1.2) is smaller than the necessary time Tt(t1.1).

The control system 7 obtains the holding time T(t1.2) by multiplying the necessary time Tt(t1.2) by the ratio r. The number of the remaining opening and closing operations in the period TW is one. Accordingly, the pressure value L6 needs to reach the target pressure value L5 in the third opening and closing operation. Therefore, the ratio r is set as 1 in the description of the embodiment. That is, the necessary time Tt(t1.2) is the same as the holding time T(t1.2).

As described above, the control system 7 determines the holding time T using the necessary time Tt and the number of opening and closing operations of the regulating valve 3, which is preset in the period TW. That is, the ratio r is determined using the necessary time Tt and the preset number of opening and closing operations of regulating valve 3, and then the holding time T is determined.

The setting of the ratio r of the opening and closing operations of the regulating valve 3 in each period TW is not limited to this example. For example, the ratio r may be constant regardless of the necessary time Tt and the number of opening and closing operations or the ratio r may increase or reduce as the number of opening and closing operations increases. Alternatively, the ratio r may be larger than 1.

### <Holding time T: Pressure of master cylinder MC>

In the above description, the control system 7 determines the holding time using the difference between the target pressure value L5 and the pressure value L6 when the opening and closing operations of the regulating valve 3 are performed. In addition, the control system 7 may determine the hold time T using the difference between the pressure value (see L3 in Fig. 4) of the master cylinder MC in the opening and closing operations of the regulating valve 3 and the pressure value in the opening and closing operations of the regulating valve 3.

As the difference between the pressure of the master cylinder MC and the pressure of the wheel cylinder WC increases, an increase in the pressure of the wheel cylinder WC by one opening and closing operation of the pressure amplifying valve EV becomes larger. For example, when the difference between the pressure of the master cylinder MC and the pressure of the wheel cylinder WC is large, the ratio r and the holding time T may be smaller.

The pressure of the pressure L3 of the master cylinder MC may be calculated in the first time (time t1 and time t2) in each period TW or may be calculated for each opening and closing operation of each period TW.

In the former case, if the pressure L3 of the master cylinder MC used in the first opening and closing operation is used in the second and third opening and closing operations, it is possible to reduce the load of calculating the pressure L3 of the master cylinder MC on the control system 7.

In the latter case, since the pressure L3 of the master cylinder MC is obtained for each opening and closing operation, the difference between the pressure L3 of the master cylinder MC and the pressure of the wheel cylinder WC can be calculated more accurately.

### <Control flow in pressure increasing control during operation of ABS>

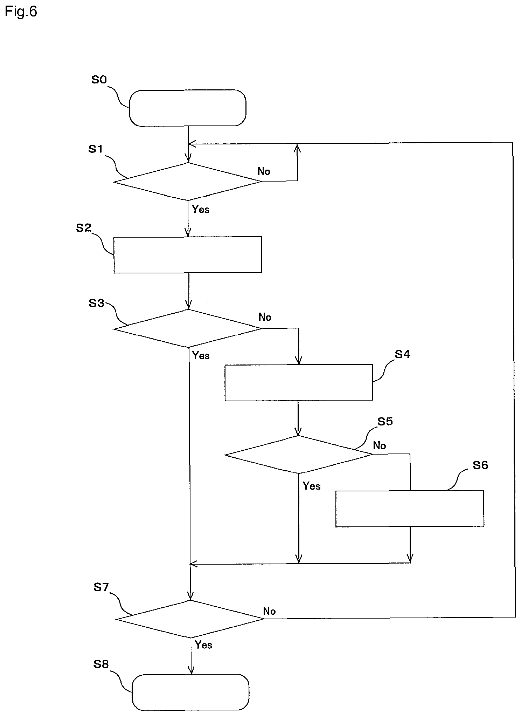

Fig. 6 is an example of a control flow of pressure increasing control of the hydraulic apparatus 1 according to the embodiment. The flowchart in Fig. 6 corresponds to the operations of the control system 7 and the regulating valve 3 in each period TW (time t1 to time t2 or time t2 to time t3) in Fig. 5. That is, the operations of step S0 to step S8 are performed in one period TW. Step S0 in Fig. 6 corresponds to the start of pressure increasing control and step S8 corresponds to the end of pressure increasing control. In the embodiment, the pressure reducing valve AV is not opened in the pressure increasing control from step S0 to step S8.

### (Step S1: Whether to make transition to an opening and closing operation)

The control system 7 determines whether the target pressure increasing amount is larger than a present threshold.

The target pressure increasing amount indicates the difference between the target pressure value L5 of the wheel cylinder WC and the current pressure value L6 of the wheel cylinder WC.

When the target pressure increasing amount is larger than the preset threshold, the processing proceeds to step S2.

When target pressure increasing amount is equal to or less than the preset threshold, the processing returns to step S1.

### (Step S2: First opening and closing operation)

The control system 7 calculates the necessary time Tt and the holding time T.

The control system 7 performs the opening and closing operation of the regulating valve 3 (pressure amplifying valve EV) based on the calculated holding time T.

The first opening and closing operation corresponds to the operation between time t1 and time t1.1 in Fig. 5.

### (Step S3: Whether to continue an opening and closing operation)

The control system 7 determines whether the current pressure value L6 of the wheel cylinder WC is larger than the target pressure value L5.

When the current pressure value L6 is larger than the target pressure value L5, the processing proceeds to step S7.

When the current pressure value L6 is equal to or less than the target pressure value L5, the processing proceeds to step S4.

That is, when the difference between the target pressure value L5 and the current pressure value L6 of the wheel cylinder WC is smaller than a preset value (for example, 0), the processing proceeds to step S7. Otherwise, the processing proceeds to step S4.

Even when the holding time T is determined by multiplying the necessary time Tt by the ratio r, the pressure value L6 may exceed the target pressure value L5 as a result of the first opening and closing operation because of various causes such as a high pressure of the master cylinder MC. In this case, the processing proceeds to step S7 from this step (step S3) to eliminate the second and third opening and closing operations of the pressure amplifying valve EV.

### (Step S4: Second opening and closing operation)

The control system 7 calculates the necessary time Tt and the holding time T.

The control system 7 performs the opening and closing operation of the pressure amplifying valve EV based on the calculated holding time T.

The second opening and closing operation corresponds to the operation between time t1.1 and time t1.2 in Fig. 5.

### (Step S5: Whether to continue an opening and closing operation)

The control system 7 determines whether the current pressure value L6 of the wheel cylinder WC is larger than the target pressure value L5.

When the current pressure value L6 is larger than the target pressure value L5, the processing proceeds to step S7.

When the current pressure value L6 is equal to or less than the target pressure value L5, the processing proceeds to step S6.

That is, when the difference between the target pressure value L5 and the current pressure value L6 of the wheel cylinder WC is smaller than a preset value (for example, 0), the processing proceeds to step S7. Otherwise, the processing proceeds to step S6.

Step S5 is provided for the same purpose as step S3. Before the third opening and closing operation, the pressure value L6 may exceed the target pressure value L5. In this case, the processing proceeds to step S7 from this step (step S5) to eliminate the third opening and closing operation of the pressure amplifying valve EV.

### (Step S6: Third opening and closing operation)

The control system 7 calculates the necessary time Tt and the holding time T.

The control system 7 performs the opening and closing operation of the pressure amplifying valve EV based on the calculated holding time T.

The third opening and closing operation corresponds to the operation between time t1.2 and time t2 in Fig. 5.

### (Step S7)

In step S7, the control system 7 determines whether the pressure has been increased. That is, the control system 7 determines whether the difference between the current vehicle body speed and the current wheel speed is larger than a present value.

When the difference is larger than the present value, the control system 7 completes the pressure increasing control (that is, the control system 7 does not start the period TW next to the pressure increasing control).

When the difference is equal to or less than the present value, the processing returns to step S1 (that is, the control system 7 starts the period TW next to the pressure increasing control).

### <Effects provided by the hydraulic apparatus 1 according to the embodiment>

When the control system 7 of the hydraulic apparatus 1 according to the embodiment performs an n-th (n ≥ 2) opening and closing operation of the regulating valve 3 in a preset period TW, the control system 7 determines the holding time T of the opening and closing state of the regulating valve 3 in the n-th opening and closing operation based on the pressure value L6 of the wheel cylinder WC in the n-th opening and closing operation of the regulating valve 3 and the target pressure value L5 in the m-th (m < n) opening and closing operation of the regulating valve 3 in the same period, and, based on the holding time, performs the n-th opening and closing operation.

In the opening and closing operations of the regulating valve 3 in each period TW, it is possible to prevent, for example, the braking force for wheels from becoming too large because the pressure value L6 exceeds the target pressure value L5. In addition, since a plurality of opening and closing operations of the regulating valve 3 changes the pressure of the wheel cylinder WC, the pressure value L6 is likely to get close to or coincide with the target pressure value L5. Since the hydraulic apparatus 1 according to the embodiment has the above structure, the accuracy of pressure control can be improved.

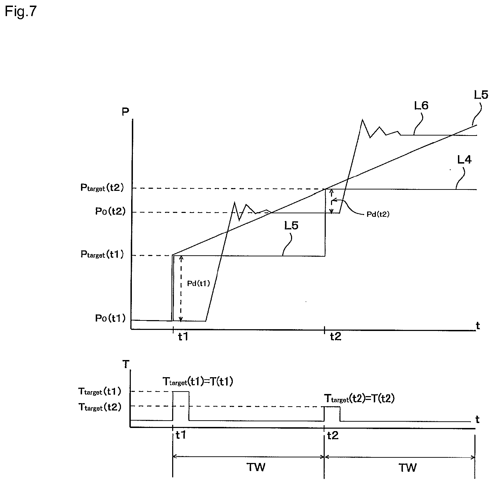

Fig. 7 illustrates temporal changes in the pressure value L6 of the wheel cylinder WC during the pressure increasing control of a conventional hydraulic apparatus. During the pressure increasing control of the conventional hydraulic apparatus, each period TW is not divided into three to perform a plurality of opening and closing operations for each period TW unlike the embodiment. For example, when the necessary time Tt is calculated based on the difference between the pressure of the master cylinder MC and the pressure of the wheel cylinder WC, if there is error in the pressure value of the master cylinder MC or the like, the necessary time Tt deviates from the originally requested value accordingly. When such error arises, if an attempt is made to cause the pressure of the wheel cylinder WC to reach the target pressure value L5 in one opening and closing operation, the effects of the error may cause the target pressure value to be exceeded significantly.

In addition, when the temperature of the regulating valve or the voltage supplied to the regulating valve changes, the necessary time Tt deviates from the originally requested value . If an attempt is made to cause the pressure of the wheel cylinder WC to reach the target pressure value L5 in one opening and closing operation even though there are factors such as the temperature and the like of the regulating valve, the effects of the factors may cause the target pressure value to be exceeded significantly. As described above, the conventional hydraulic apparatus cannot achieve highly accurate pressure control unlike the hydraulic apparatus 1 according to the embodiment.

Since the control system 7 of the hydraulic apparatus 1 according to the embodiment determines the holding time T based on the target pressure value L5 in the m-th (m < n) opening and closing operation of the regulating valve 3.

That is, the control system 7 does not calculate the value corresponding to the estimated transition L4 of the target pressure every opening and closing operation. For example, the control system 7 calculates the value at time t1, but it uses the previous target pressure value L5 at time t1.1 and time t1.2 without calculating the value. Accordingly, calculation loads on the control system 7 can be reduced.

As described above, the hydraulic apparatus 1 according to the embodiment can improve the accuracy of pressure control of the brake fluid while suppressing calculation loads on the control system 7.

### Reference Signs List

- 1:: hydraulic apparatus
- 2:: pump unit
- 2A:: driving mechanism
- 2B:: pump element
- 3:: regulating valve
- 3A:: first pressure amplifying valve
- 3B:: first pressure reducing valve
- 3C:: second pressure amplifying valve
- 3D:: second pressure reducing valve
- 4:: internal flow passage
- 4A:: first internal flow passage
- 4B:: second internal flow passage
- 4C:: third internal flow passage
- 4D:: fourth internal flow passage
- 4E:: fifth internal flow passage
- 4F:: sixth internal flow passage
- 5A:: first float restrictor
- 5B:: second float restrictor
- 6A:: first accumulator
- 6B:: second accumulator
- 7:: control system
- 7A:: input unit
- 7B:: processor unit
- 7B1:: speed calculating unit
- 7B2:: differential pressure calculating unit
- 7B3:: holding time determination unit
- 7B4:: driving mechanism control unit
- 7B5:: first pressure amplifying valve control unit
- 7B6:: first pressure reducing valve control unit
- 7B7:: second pressure amplifying valve control unit
- 7B8:: second pressure reducing valve control unit
- 7C:: memory unit
- 8:: detecting unit
- 8A:: first pressure sensor
- 8B:: second pressure sensor
- 8C:: wheel speed sensor
- 8D:: wheel speed sensor
- 20:: front wheel
- 21:: front brake pad
- 22:: front wheel cylinder
- 23:: brake fluid pipe
- 24:: handle lever
- 25:: first master cylinder
- 26:: first reserver
- 27:: brake fluid pipe
- 30:: rear wheel
- 31:: rear brake pad
- 32:: rear wheel cylinder
- 33:: brake fluid pipe
- 34:: foot pedal
- 35:: second master cylinder
- 36:: second reserver
- 37:: brake fluid pipe
- 100:: hydraulic pressure control system
- C1:: front wheel hydraulic pressure circuit
- C2:: rear wheel hydraulic pressure circuit
- EV:: pressure amplifying valve
- AV:: pressure reducing valve
- L1:: vehicle body speed
- L2:: wheel speed
- L3:: pressure
- L4:: estimated transition
- L5:: target pressure value
- L7:: pressure value
- MC:: master cylinder
- P:: port
- P1:: first port
- P2:: second port
- P3:: third port
- P4:: fourth port
- PS:: pressure sensor
- T:: holding time
- T1:: calculating unit
- T2:: actuator control unit
- TW:: period
- Ttarget (Tt):: necessary time
- WC:: wheel cylinder
- WS:: wheel speed sensor

## Claims

1. A hydraulic apparatus (1) to be incorporated into a vehicle, comprising:
a regulating valve (3) provided in a pipe (4) connected to a wheel cylinder (WC) of the vehicle, the regulating valve (3) regulating a pressure of a brake fluid in the pipe (4); and
a control system (7) repeatedly performing an opening and closing operation of the regulating valve (3) based on a target pressure value of the wheel cylinder (WC) and a pressure value of the wheel cylinder (WC),
wherein the regulating valve (3) is controlled so as to be capable of performing the opening and closing operation repeatedly in an update period (TW) of the target pressure value, the update period (TW) being preset as a term in which a common target pressure value keeps being used,
wherein, when performing a first opening and closing operation of the regulating valve (3) in the update period (TW), the control system (7) determines a holding time of an opening and closing state in the first opening and closing operation of the regulating valve (3) based on the pressure value in the first opening and closing operation of the regulating valve (3) and the target pressure value at a beginning of the update period (TW) and, based on the holding time, performs the first opening and closing operation of the regulating valve (3),
wherein, when performing an n-th (n ≥ 2) opening and closing operation of the regulating valve (3) in the update period, the control system determines a holding time of an opening and closing state in the n-th opening and closing operation of the regulating valve based on the pressure value in the n-th opening and closing operation of the regulating valve (3) and the target pressure value at the beginning of the update period (TW) and, based on the holding time, performs the n-th opening and closing operation of the regulating valve (3).

2. The hydraulic apparatus (1) according to claim 1,
wherein, when performing the n-th opening and closing operation of the regulating valve in the update period, the control system (7) obtains a necessary time for holding the opening and closing state of the regulating valve (3) necessary for all of subsequent opening and closing operations in the update period (TW) using the pressure value in the n-th opening and closing operation of the regulating valve (3) and the target pressure value at the beginning of the update period (TW), and
determines the holding time of the opening and closing state in the n-th opening and closing operation of the regulating valve (3) based on the necessary time.

3. The hydraulic apparatus (1) according to claim 1 or 2,
wherein, when performing the first opening and closing operation of the regulating valve (3) in the update period (TW), the control system (7) obtains a necessary time for holding the opening and closing state of the regulating valve in all of the opening and closing operations in the update period using the pressure value in the first opening and closing operation of the regulating valve (3) and the target pressure value at the beginning of the update period (TW),
determines the holding time of the opening and closing state in the first opening and closing operation of the regulating valve (3) based on the necessary time.

4. The hydraulic apparatus (1) according to claim 3,
wherein the control system (7) determines the holding time using the necessary time and a preset number of opening and closing operations of the regulating valve (3) in the update period.

5. The hydraulic apparatus (1) according to any one of claims 1 to4,
wherein the control system (7) determines the holding time using a difference between the target pressure value and the pressure value in each of the opening and closing operations of the regulating valve (3).

6. The hydraulic apparatus (1) according to claim 5,
wherein the control system (7) determines the holding time further using a difference between a pressure value of a master cylinder (MC) in each of the opening and closing operations of the regulating valve (3) and the pressure value in each of the opening and closing operations of the regulating valve (3).

7. The hydraulic apparatus (1) according to any one of claims 1 to 6,
wherein the regulating valve (3) includes a pressure amplifying valve (EV) and a pressure reducing valve (AV) provided in the pipe (4), and
when increasing a pressure of the brake fluid, the control system (7) performs an opening and closing operation of the pressure amplifying valve (EV) based on the holding time with the pressure reducing valve (AV) closed.

8. The hydraulic apparatus (1) according to any one of claims 1 to 7,
wherein the control system (7) does not perform a remaining opening and closing operation of the regulating valve (3) in the update period (TW) when a difference between the target pressure value and the pressure value in each of the opening and closing operations of the regulating valve (3) is smaller than a preset value.

9. A method for controlling a hydraulic apparatus (1) including a regulating valve (3) provided in a pipe (4) connected to a wheel cylinder (WC) of a vehicle, the regulating valve (3) regulating a pressure of a brake fluid in the pipe (4), the method comprising:
a step of repeatedly performing an opening and closing operation of the regulating valve (3) based on a target pressure value of the wheel cylinder and a pressure value of the wheel cylinder (WC),
wherein the regulating valve (3) is controlled so as to be capable of performing the opening and closing operation repeatedly in an update period (TW) of the target pressure value, the update period (TW) being preset as a term in which common target pressure value keeps being used,
wherein, in the step, when a first opening and closing operation of the regulating valve (3) in the update period (TW) is performed,
a holding time of an opening and closing state in the first opening and closing operation of the regulating valve is determined based on the pressure value in the first opening and closing operation of the regulating valve (3) and the target pressure value at a beginning of the update period (TW), and
the first opening and closing operation of the regulating valve (3) is performed based on the holding time,
wherein, in the step, when an n-th (n ≥ 2) opening and closing operation of the regulating valve (3) in the update period is performed,
a holding time of an opening and closing state in the n-th opening and closing operation of the regulating valve (3) is determined based on the pressure value in the n-th opening and closing operation of the regulating valve and the target pressure value at the beginning of the update period, and
the n-th opening and closing operation of the regulating valve (3) is performed based on the holding time.

## Patentansprüche

1. Hydraulische Vorrichtung (1) zum Einbau in ein Fahrzeug, umfassend:
ein Regelventil (3), das in einem mit einem Radzylinder (WC) des Fahrzeugs verbundenen Rohr (4) vorgesehen ist, wobei das Regelventil (3) einen Druck eines Bremsfluids in dem Rohr (4) regelt; und
ein Steuersystem (7), das einen Öffnungs- und Schließvorgang des Regelventils (3) basierend auf einem Zieldruckwert des Radzylinders (WC) und einem Druckwert des Radzylinders (WC) wiederholt durchführt,
wobei das Regelventil (3) so gesteuert wird, dass es in der Lage ist, den Öffnungs- und Schließvorgang in einer Aktualisierungsperiode (TW) des Zieldruckwerts wiederholt durchzuführen, wobei die Aktualisierungsperiode (TW) als ein Zeitraum, in dem ein gemeinsamer Zieldruckwert fortwährend verwendet wird, voreingestellt ist,
wobei das Steuersystem (7) beim Durchführen des Öffnungs- und Schließvorgangs des Regelventils (3) in der Aktualisierungsperiode (TW) eine Haltezeit eines Öffnungs- und Schließzustands in dem ersten Öffnungs- und Schließvorgang des Regelventils (3) basierend auf dem Druckwert in dem ersten Öffnungs- und Schließvorgang des Regelventils (3) und dem Zieldruckwert zu Beginn der Aktualisierungsperiode (TW) bestimmt und basierend auf der Haltezeit den ersten Öffnungs- und Schließvorgang des Regelventils (3) durchführt,
wobei das Steuersystem beim Durchführen eines n-ten (n ≥ 2) Öffnungs- und Schließvorgangs des Regelventils (3) in der Aktualisierungsperiode eine Haltezeit eines Öffnungs- und Schließzustands in dem n-ten Öffnungs- und Schließvorgang des Regelventils basierend auf dem Druckwert in dem n-ten Öffnungs- und Schließvorgang des Regelventils (3) und dem Zieldruckwert zu Beginn der Aktualisierungsperiode (TW) bestimmt und basierend auf der Haltezeit den n-ten Öffnungs- und Schließvorgang des Regelventils (3) durchführt.

2. Hydraulische Vorrichtung (1) nach Anspruch 1, wobei das Steuersystem (7) beim Durchführen des n-ten Öffnungs- und Schließvorgangs des Regelventils eine erforderliche Zeit zum Halten des Öffnungs- und Schließzustands des Regelventils (3), die für alle nachfolgenden Öffnungs- und Schließvorgänge in der Aktualisierungsperiode (TW) erforderlich ist, unter Verwendung des Druckwerts in dem n-ten Öffnungs- und Schließvorgang des Regelventils (3) und des Zieldruckwerts zu Beginn der Aktualisierungsperiode (TW) erhält, und
die Haltezeit des Öffnungs- und Schließzustands im n-ten Öffnungs- und Schließvorgang des Regelventils (3) basierend auf der erforderlichen Zeit bestimmt.

3. Hydraulische Vorrichtung (1) nach Anspruch 1 oder 2,
wobei das Steuersystem (7) beim Durchführen des Öffnungs- und Schließvorgangs des Regelventils (3) in der Aktualisierungsperiode (TW) eine erforderliche Zeit zum Halten des Öffnungs- und Schließzustands des Regelventils in allen der Öffnungs- und Schließvorgänge in der Aktualisierungsperiode unter Verwendung des Druckwerts in dem ersten Öffnungs- und Schließvorgang des Regelventils (3) und des Zieldruckwerts zu Beginn der Aktualisierungsperiode (TW) erhält,
die Haltezeit des Öffnungs- und Schließzustands in dem ersten Öffnungs- und Schließvorgang des Regelventils (3) basierend auf der erforderlichen Zeit bestimmt.

4. Hydraulische Vorrichtung (1) nach Anspruch 3, wobei das Steuersystem (7) die Haltezeit unter Verwendung der erforderlichen Zeit und einer voreingestellten Anzahl von Öffnungs- und Schließvorgängen des Regelventils (3) in der Aktualisierungsperiode bestimmt.

5. Hydraulische Vorrichtung (1) nach einem der Ansprüche 1 bis 4,
wobei das Steuersystem (7) die Haltezeit unter Verwendung einer Differenz zwischen dem Zieldruckwert und dem Druckwert in jedem der Öffnungs- und Schließvorgänge des Regelventils (3) bestimmt.

6. Hydraulische Vorrichtung (1) nach Anspruch 5, wobei das Steuersystem (7) die Haltezeit weiter unter Verwendung einer Differenz zwischen einem Druckwert eines Hauptzylinders (MC) in jedem der Öffnungs- und Schließvorgänge des Regelventils (3) und dem Druckwert der Öffnungs- und Schließvorgänge des Regelventils (3) bestimmt.

7. Hydraulische Vorrichtung (1) nach einem der Ansprüche 1 bis 6,
wobei das Regelventil (3) ein Druckverstärkungsventil (EV) und ein Druckreduzierventil (AV), die in dem Rohr (4) vorgesehen sind, enthält, und
das Steuersystem (7) beim Erhöhen eines Drucks des Bremsfluids einen Öffnungs- und Schließvorgang des Druckverstärkungsventils (EV) basierend auf der Haltezeit bei geschlossenem Druckreduzierventil (AV) durchführt.

8. Hydraulische Vorrichtung (1) nach einem der Ansprüche 1 bis 7,
wobei das Steuersystem (7) einen verbleibenden Öffnungs- und Schließvorgang des Regelventils (3) in der Aktualisierungsperiode (TW) nicht durchführt, wenn eine Differenz zwischen dem Zieldruckwert und dem Druckwert in jedem der Öffnungs- und Schließvorgänge des Regelventils (3) kleiner als ein voreingestellter Wert ist.

9. Verfahren zum Steuern einer hydraulischen Vorrichtung (1), die ein Regelventil (3) enthält, das in einem mit einem Radzylinder (WC) eines Fahrzeugs verbundenen Rohr (4) vorgesehen ist, wobei das Regelventil (3) einen Druck eines Bremsfluids in dem Rohr (4) regelt, wobei das Verfahren Folgendes umfasst:
einen Schritt des wiederholten Durchführens eines Öffnungs- und Schließvorgangs des Regelventils (3) basierend auf einem Zieldruckwert des Radzylinders und
einem Druckwert des Radzylinders (WC), wobei das Regelventil (3) so gesteuert wird, dass es in der Lage ist, den Öffnungs- und Schließvorgang in einer Aktualisierungsperiode (TW) des Zieldruckwerts wiederholt durchzuführen, wobei die Aktualisierungsperiode (TW) als ein Zeitraum, in dem ein gemeinsamer Zieldruckwert fortwährend verwendet wird, voreingestellt ist,
wobei in dem Schritt, in dem ein erster Öffnungs- und Schließvorgang des Regelventils (3) in der Aktualisierungsperiode (TW) durchgeführt wird, eine Haltezeit eines Öffnungs- und Schließzustands in dem ersten Öffnungs- und Schließvorgang des Regelventils basierend auf dem Druckwert in dem ersten Öffnungs- und Schließvorgang des Regelventils (3) und dem Zieldruckwert zu Beginn der Aktualisierungsperiode (TW) bestimmt wird, und
ein erster Öffnungs- und Schließvorgang des Regelventils (3) basierend auf der Haltezeit durchgeführt wird,
wobei in dem Schritt, wenn ein n-ter (n > 2) Öffnungs- und Schließvorgangs des Regelventils (3) in der Aktualisierungsperiode durchgeführt wird,
eine Haltezeit eines Öffnungs- und Schließzustands in dem n-ten Öffnungs- und Schließvorgang des Regelventils (3) basierend auf dem Druckwert in dem n-ten Öffnungs- und Schließvorgang des Regelventils und dem Zieldruckwert zu Beginn der Aktualisierungsperiode bestimmt wird, und
der n-te Öffnungs- und Schließvorgang basierend auf der Haltezeit durchgeführt wird.

## Revendications

1. Appareil hydraulique (1) destiné à être incorporé dans un véhicule, comprenant :
une soupape de régulation (3) prévue dans une conduite (4) reliée à un cylindre de roue (WC) du véhicule, la soupape de régulation (3) régulant une pression d'un fluide de frein dans la conduite (4) ; et
un système de commande (7) réalisant de manière répétée une opération d'ouverture et de fermeture de la soupape de régulation (3) sur la base d'une valeur de pression cible du cylindre de roue (WC) et d'une valeur de pression du cylindre de roue (WC),
dans lequel la soupape de régulation (3) est commandée de manière à être apte à réaliser l'opération d'ouverture et de fermeture de manière répétée pendant une période de mise à jour (TW) de la valeur de pression cible, la période de mise à jour (TW) étant prédéfinie comme une durée pendant laquelle une valeur de pression cible commune continue à être utilisée,
dans lequel, lors de la réalisation d'une première opération d'ouverture et de fermeture de la soupape de régulation (3) pendant la période de mise à jour (TW), le système de commande (7) détermine un temps de maintien d'un état d'ouverture et de fermeture pendant la première opération d'ouverture et de fermeture de la soupape de régulation (3) sur la base de la valeur de pression pendant la première opération d'ouverture et de fermeture de la soupape de régulation (3) et de la valeur de pression cible au début de la période de mise à jour (TW) et, sur la base du temps de maintien, réalise la première opération d'ouverture et de fermeture de la soupape de régulation (3),
dans lequel, lors de la réalisation d'une n^{ième} (n ≥ 2) opération d'ouverture et de fermeture de la soupape de régulation (3) pendant la période de mise à jour, le système de commande détermine un temps de maintien d'un état d'ouverture et de fermeture pendant la n^{ième} opération d'ouverture et de fermeture de la soupape de régulation sur la base de la valeur de pression pendant la n^{ième} opération d'ouverture et de fermeture de la soupape de régulation (3) et de la valeur de pression cible au début de la période de mise à jour (TW) et, sur la base du temps de maintien, réalise la n^{ième} opération d'ouverture et de fermeture de la soupape de régulation (3).

2. Appareil hydraulique (1) selon la revendication 1, dans lequel, lors de la réalisation de la n^{ième} opération d'ouverture et de fermeture de la soupape de régulation pendant la période de mise à jour, le système de commande (7) obtient un temps nécessaire pour le maintien de l'état d'ouverture et de fermeture de la soupape de régulation (3) nécessaire pour toutes les opérations d'ouverture et de fermeture subséquentes pendant la période de mise à jour (TW) à l'aide de la valeur de pression pendant la n^{ième} opération d'ouverture et de fermeture de la soupape de régulation (3) et de la valeur de pression cible au début de la période de mise à jour (TW), et
détermine le temps de maintien de l'état d'ouverture et de fermeture pendant la n^{ième} opération d'ouverture et de fermeture de la soupape de régulation (3) sur la base du temps nécessaire.

3. Appareil hydraulique (1) selon la revendication 1 ou 2,
dans lequel, lors de la réalisation de la première opération d'ouverture et de fermeture de la soupape de régulation (3) pendant la période de mise à jour (TW), le système de commande (7) obtient un temps nécessaire pour le maintien de l'état d'ouverture et de fermeture de la soupape de régulation pendant toutes les opérations d'ouverture et de fermeture pendant la période de mise à jour à l'aide de la valeur de pression pendant la première opération d'ouverture et de fermeture de la soupape de régulation (3) et de la valeur de pression cible au début de la période de mise à jour (TW),
détermine le temps de maintien de l'état d'ouverture et de fermeture pendant la première opération d'ouverture et de fermeture de la soupape de régulation (3) sur la base du temps nécessaire.

4. Appareil hydraulique (1) selon la revendication 3, dans lequel le système de commande (7) détermine le temps de maintien à l'aide du temps nécessaire et d'un nombre prédéfini d'opérations d'ouverture et de fermeture de la soupape de régulation (3) pendant la période de mise à jour.

5. Appareil hydraulique (1) selon l'une quelconque des revendications 1 à 4,
dans lequel le système de commande (7) détermine le temps de maintien à l'aide d'une différence entre la valeur de pression cible et la valeur de pression pendant chacune des opérations d'ouverture et de fermeture de la soupape de régulation (3).

6. Appareil hydraulique (1) selon la revendication 5, dans lequel le système de commande (7) détermine le temps de maintien en outre à l'aide d'une différence entre une valeur de pression d'un maître-cylindre (MC) pendant chacune des opérations d'ouverture et de fermeture de la soupape de régulation (3) et la valeur de pression pendant chacune des opérations d'ouverture et de fermeture de la soupape de régulation (3).

7. Appareil hydraulique (1) selon l'une quelconque des revendications 1 à 6,
dans lequel la soupape de régulation (3) comporte une soupape d'amplification de pression (EV) et une soupape de réduction de pression (AV) prévues dans la conduite (4), et
lors d'une augmentation d'une pression du fluide de frein, le système de commande (7) réalise une opération d'ouverture et de fermeture de la soupape d'amplification de pression (EV) sur la base du temps de maintien avec la soupape de réduction de pression (AV) fermée.

8. Appareil hydraulique (1) selon l'une quelconque des revendications 1 à 7,
dans lequel le système de commande (7) ne réalise pas une opération restante d'ouverture et de fermeture de la soupape de régulation (3) pendant la période de mise à jour (TW) lorsqu'une différence entre la valeur de pression cible et la valeur de pression pendant chacune des opérations d'ouverture et de fermeture de la soupape de régulation (3) est inférieure à une valeur prédéfinie.

9. Procédé de commande d'un appareil hydraulique (1) comportant une soupape de régulation (3) prévue dans une conduite (4) reliée à un cylindre de roue (WC) d'un véhicule, la soupape de régulation (3) régulant une pression d'un fluide de frein dans la conduite (4), le procédé comprenant
une étape de réalisation de manière répétée d'une opération d'ouverture et de fermeture de la soupape de régulation (3) sur la base d'une valeur de pression cible du cylindre de roue et d'une valeur de pression du cylindre de roue (WC),
dans lequel la soupape de régulation (3) est commandée de manière à être apte à réaliser l'opération d'ouverture et de fermeture de manière répétée pendant une période de mise à jour (TW) de la valeur de pression cible, la période de mise à jour (TW) étant prédéfinie comme une durée pendant laquelle une valeur de pression cible commune continue à être utilisée, dans lequel, pendant l'étape, lorsqu'une première opération d'ouverture et de fermeture de la soupape de régulation (3) est réalisée pendant la période de mise à jour (TW),
un temps de maintien d'un état d'ouverture et de fermeture dans la première opération d'ouverture et de fermeture de la soupape de régulation est déterminé sur la base de la valeur de pression dans la première opération d'ouverture et de fermeture de la soupape de régulation (3) et de la valeur de pression cible au début de la période de mise à jour (TW) et,
la première opération d'ouverture et de fermeture de la soupape de régulation (3) est réalisée sur la base du temps de maintien,
dans lequel, pendant l'étape, lorsqu'une n^{ième} (n ≥ 2) opération d'ouverture et de fermeture de la soupape de régulation (3) est réalisée pendant la période de mise à jour,
un temps de maintien d'un état d'ouverture et de fermeture pendant la n^{ième} opération d'ouverture et de fermeture de la soupape de régulation (3) est déterminé sur la base de la valeur de pression pendant la n^{ième} opération d'ouverture et de fermeture de la soupape de régulation et de la valeur de pression cible au début de la période de mise à jour, et
la n^{ième} opération d'ouverture et de fermeture de la soupape de régulation (3) est réalisée sur la base du temps de maintien.
